# EUROPEAN PATENT APPLICATION

(11) **EP 1 955 763 A1**
(43) Date of publication of application: **13.08.2008**
(21) Application number: 08151144.6
(22) Date of filing: 07.02.2008
(51) Int. Cl.: B01J 19/28, C10J 3/30, F27B 9/38

(54) **Biomass gasifier**

(30) Priority: 08.02.2007 ES 200700333
(71) Applicant: Vilella Pons, Jose, 08500 Vic (ES)
(72) Inventor: Vilella Pons, Jose, 08500 Vic (ES)
(74) Representative: Ponti Sales, Adelaida

(57) **Abstract**

The biomass gasifier comprises a hopper (1) where the fuel material is placed, a feeding duct (2) of said fuel material connecting said hopper (1) with a gasification chamber (3), and it is characterized in that said feeding duct (2) is integral with said gasification chamber defining a gasification assembly, said gasification chamber comprising a vibrator (5) and said gasification assembly being mounted on flexible elements (6). Said flexible elements are preferably flexible connecting rods (6) which are inclined with respect to the feeding duct (2).

The gasifier of the present invention can be used with fuel formed by crushed shavings, sawdust, e.g. made of wood or other materials, i.e. with biomass, so that the gasification in the gasification is obtained thanks to the vibration.

## Description

The present invention refers to a biomass gasifier, which is completely independent.

### BACKGROUND OF THE INVENTION

The boilers can use different fuels, such as e.g. gas oil, shavings of crushed wood or sawdust. In the present description the term "biomass" is used to identify fuel of biological origin, such as e.g. obtained from wood.

The use of crushed shavings of wood or sawdust presents the main advantage with respect to gas oil that it is a so much cheaper material.

To feed said triturated shavings to the combustion chamber of the boiler rotatable systems are usually used, so that the feeding duct rotates about its longitudinal axis, moving the shavings along said duct.

However, these rotatable feeding devices have the drawback that they do not prevent the shavings from clog.

### DESCRIPTION OF THE INVENTION

With the feeding device of the invention said drawbacks can be solved, presenting other advantages that can be solved.

The biomass gasifier of the present invention comprises a hopper where the fuel material is placed, a feeding duct of said fuel material connecting said hopper to a gasification chamber, and it is characterized in that said feeding duct is integral with said gasification chamber defining a gasification assembly, said gasification assembly comprising a vibrator and said gasification assembly being mounted on flexible elements.

Advantageously, said flexible elements are flexible connecting rods that are inclined with respect to the feeding duct.

Also advantageously, said gasification chamber comprises an air feeding nozzle.

If wished, and a according to a preferred embodiment, said gasification chamber can comprise a second air feeding nozzle.

The gasifier of the present invention can be used with fuel formed by crushed shavings, sawdust, e.g. made of wood or other materials, i.e. with biomass, so that the gasification in the gasification is obtained thanks to the vibration.

Furthermore, it permits to adjust the vibration according to the fuel material.

### BRIEF DESCRIPTION OF THE DRAWINGS

For a better understanding of what has been described some drawings are attached in which, diagrammatically and only as a non-limitative example, a practical case of embodiment is shown.
Fig. 1 is a diagrammatical elevation view of a gasifier of the present invention, according to a first embodiment;
Fig. 2 is a diagrammatical elevation view of the gasifier of the present invention, according to a second embodiment.

### DESCRIPTION OF A PREFERRED EMBODIMENT

As it can be seen in the figures, el gasifier shown comprises a hopper 1, where the biomass is placed, which is preferably crushed shavings of wood, sawdust or the like, a feeding duct 2 connecting the hopper 1 with a gasification chamber 3 and a combustion chamber 4 in communication with said gasification chamber 3.

According to the invention, said feeding duct 2 is integral with said gasification chamber 3, defining a gasification assembly, which comprises a vibrator 5, producing the vibration of the gasification assembly.

Furthermore, said gasification assembly is mounted on flexible connecting rods 6 which are inclined with respect to the feeding duct 2, i.e. they are not placed perpendicular with respect to said feeding duct 2.

When the biomass is placed in the hopper 1, the biomass is placed by gravity inside the feeding duct 2. This feeding duct 2 vibrates causing a movement of the shavings from the left side of the duct to its right side, according to the boiler shown in the figure.

Thanks to the inclined arrangement of the flexible connecting rods 6 and to the vibration caused by the vibrator 5, the feeding duct 2 is slightly inclined to the advancement position, so that the biomass is transported to the gasification chamber 3.

Furthermore, to permit the gasification of the biomass, the gasification chamber 3 comprises an air feeding nozzle 7.

This gasification chamber 3 will be advantageously hot, permitting also the gasification thanks to the vibration movement.

The relationship between the height and the width of this gasification chamber 3 will change according to the grading of the shavings.

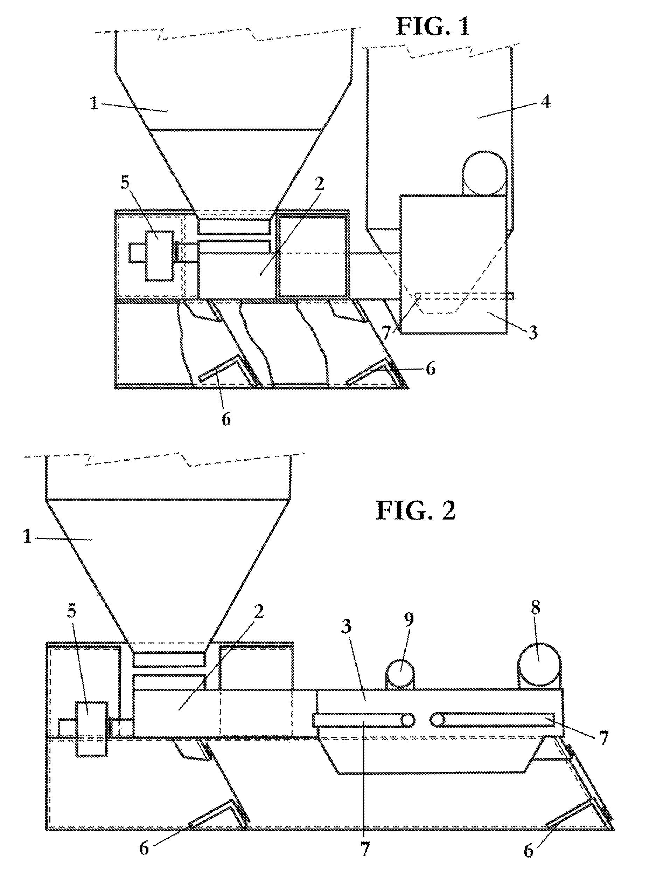

In fig. 2 a second embodiment of the gasifier of the present invention is shown. With respect to the embodiment shown in fig. 1, the main difference is the shape of the gasification chamber 3, which comprises two air feeding nozzles 7. According to this shape of the gasification chamber 3, substantially horizontal, a drying zone, a distillation zone, an oxidation zone and a reduction zone can be defined. On the other hand, the gasification chamber 3 of fig. 1 said zones cannot be defined.

In this figure the combustion chamber is not shown for simplicity reasons, but an exit of CO+H₂ 8 is shown, in which the combustion chamber will be connected, and a water vapor and volatiles exit 9.

Even though reference is made to a specific embodiment of the invention, it is apparent for a person skilled in the art that the described gasifier is susceptible of numerous variations and modifications, and that all the details can be substituted by other technically equivalent ones, without departing from the scope of protection defined by the attached claims.

## Claims

1. Biomass gasifier comprising a hopper (1) where the fuel material is placed, a feeding duct (2) of said fuel material connecting said hopper (1) with a gasification chamber (3), **characterized in that** said feeding duct (2) is integral with said gasification chamber defining a gasification assembly, said gasification chamber comprising a vibrator (5) and said gasification assembly being mounted on flexible elements (6).

2. Gasifier according to claim 1, **characterized in that** said flexible elements are flexible connecting rods (6) which are inclined with respect to the feeding duct (2).

3. Gasifier according to claim 1, **characterized in that** said gasification chamber (3) comprises an air feeding nozzle (7).

4. Gasifier according to claim 3, **characterized in that** said gasification chamber (3) comprises a second air feeding nozzle (7).
